(19) Europäisches Patentamt

European Patent Office

Office européen des brevets

(11) **EP 3 489 741 B1**

(12) **EUROPEAN PATENT SPECIFICATION**

(45) Date of publication and mention
of the grant of the patent:
**22.06.2022 Bulletin 2022/25**

(21) Application number: **17830898.7**

(22) Date of filing: **11.07.2017**

(51) International Patent Classification (IPC):
**G02F 1/17** $^{(2019.01)}$

(52) Cooperative Patent Classification (CPC):
**G02F 1/1334; G02F 1/13394; G02F 1/172;
G02F 1/19;** G02F 1/13398

(86) International application number:
**PCT/JP2017/025225**

(87) International publication number:
**WO 2018/016378 (25.01.2018 Gazette 2018/04)**

(54) **LIGHT CONTROL LAMINATE AND RESIN SPACER FOR LIGHT CONTROL LAMINATES**

LICHTSTEUERUNGSLAMINAT UND HARZABSTANDSHALTER FÜR
LICHTSTEUERUNGSLAMINATE

STRATIFIÉ DE COMMANDE DE LUMIÈRE ET MATÉRIAU TAMPON EN RÉSINE DESTINÉS À DES
STRATIFIÉS DE COMMANDE DE LUMIÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.07.2016 JP 2016141590**

(43) Date of publication of application:
**29.05.2019 Bulletin 2019/22**

(73) Proprietor: **Sekisui Chemical Co., Ltd.
Osaka-shi, Osaka 530-8565 (JP)**

(72) Inventors:
• **YAMADA, Yasuyuki
Kouka-shi
Shiga 528-8585 (JP)**

• **NAKAJIMA, Minoru
Kouka-shi
Shiga 528-8585 (JP)**
• **UEDA, Saori
Kouka-shi
Shiga 528-8585 (JP)**

(74) Representative: **Ter Meer Steinmeister & Partner
Patentanwälte mbB
Nymphenburger Straße 4
80335 München (DE)**

(56) References cited:
WO-A1-2009/072464     WO-A1-2015/083489
JP-A- 2000 258 758     JP-A- 2013 222 139
JP-A- 2013 228 646     JP-A- 2013 524 279
JP-B1- 5 910 788       US-A1- 2009 033 859
US-A1- 2009 035 687    US-A1- 2016 062 157

EP 3 489 741 B1

**EP 3 489 741 B1**

**Description**

**TECHNICAL FIELD**

The present invention relates to a light control laminate having light control performance and a resin spacer used for light control laminates.

**BACKGROUND ART**

Light control materials such as light control glass and a light control film are materials having a property of varying in light transmittance depending on the presence or absence of the electric field application and being capable of controlling the incident light quantity. Moreover, in accordance with the mechanism of action for making the light transmittance vary, systems of the light control material are roughly classified into an SPD (Suspended Particle Device) system and a PDLC (Polymer Dispersed Liquid Crystal) system.

The SPD system is a system in which a light control suspension is dispersed in a resin matrix. The light control suspension contains a light control particle. The light control particle can respond to an electric field. In the SPD system, when light control particles are in a state of being applied with no electric field, since the light control particles, which are dispersed in a light control suspension, perform Brownian motion to absorb, scatter, or reflect light, the incident light does not transmit through the light control material. When being applied with an electric field, since light control particles are polarized to be arrayed in a direction parallel to the electric field direction, the incident light transmits through the light control material. As described above, in the SPD system, polarization orientation of light control particles can be utilized to control the light transmittance.

As an example of an SPD system light control material, the following Patent Document 1 discloses a suspended particle device having a first substrate, a second substrate, a first electrode, a second electrode, and a suspension. The first electrode, the second electrode, and the suspension are arranged between the first substrate and the second substrate. The suspension contains particles having an anisotropic shape and a dispersion medium, and the particles are dispersed in the dispersion medium. During a light control starting period, by applying a first alternating-current voltage between the first electrode and the second electrode, the state of the particles is changed from a disordered state to an oriented state in a direction along the electric field direction. During a light controlling period, by applying a second alternating-current voltage between the first electrode and the second electrode, the oriented state of the particles is maintained. During a light control stopping period, by making the first electrode and the second electrode become equipotential with regard to the alternating-current voltage therebetween, the state of the particles is changed from the oriented state to a disordered state.

The PDLC system is a system in which a liquid crystal is dispersed in a resin matrix. Examples of a PDLC system form include a form in which a liquid crystal and a resin matrix dispersed in the resin matrix are formed into a continuous phase, a form in which a liquid crystal is made into a liquid crystal capsule to be dispersed in a resin matrix, and the like. In a state of being applied with no electric field, since molecular orientation of liquid crystal molecules is not uniform, the incident light is scattered in the light control material due to a difference in the refractive index between the resin matrix and the liquid crystal, and an opaque state is observed. When being applied with an electric field, liquid crystal molecules are arrayed in a direction parallel to the electric field direction. On this occasion, the refractive index of the resin matrix and the refractive index of the liquid crystal become equivalent, this permits the incident light to transmit through the light control material, and a transparent state is observed. As described above, in the PDLC system, molecular orientation of liquid crystal molecules is utilized to control the light transmittance.

As an example of a PDLC system light control material, the following Patent Document 2 discloses a light control device in which two ITO layers are respectively bonded to both sides of a polymer/liquid crystal composite material layer. The polymer/liquid crystal composite material layer is a layer in which a liquid crystal material is dispersed in a high-molecular material being a polymer of acrylic monomers. The proportion of the amount of the acrylic monomer to the total amount of the acrylic monomer and the liquid crystal material falls within the range of 30 to 45% by weight. Between the polymer/liquid crystal composite material layer and the ITO layer, a silane coupling agent layer is arranged.

**Related Art Documents**

**Patent Documents**

Patent Document 1: JP 2014-139693 A
Patent Document 2: WO 2016/051894 A1

JP 2013 228646 discloses, a light control laminate having a first transparent base material, a second transparent base material and a light control layer arranged between the first transparent base material and the second transparent base material. The light control layer contains plural resin spacers . The resin spacers have a spherical shape or a pillar-like shape. The light control layer may further contain a binder and a liquid crystal material dispersed in the binder or a resin matrix and a light control suspension dispersed in the resin matrix.

US2009/033859 and JP2003238622 disclose an LCD device having spacers with a 10% K value of 10000 N/mm$^2$ or less.

## SUMMARY OF THE INVENTION

## PROBLEMS TO BE SOLVED BY THE INVENTION

In conventional light control materials such as those described in Patent Documents 1 and 2, since no spacer is used, the uniformity of a gap between base materials in the light control material fails to be secured, and there are cases where color irregularity occurs.

An object of the present invention is to provide a light control laminate in which the gap between base materials can be controlled with high precision. Moreover, an object of the present invention is to provide a resin spacer for light control laminates with which the gap between base materials can be controlled with high precision.

## MEANS FOR SOLVING THE PROBLEMS

The light control laminate according to the present invention comprises the features of claim 1. Preferred embodiments are disclosed in the dependent claims.

In a specific aspect of the light control laminate according to the present invention, the resin spacers have a spherical shape or a pillar-like shape.

In a specific aspect of the light control laminate according to the present invention, the light control layer further contains a binder and a liquid crystal material dispersed in the binder.

In a specific aspect of the light control laminate according to the present invention, the light control layer further contains a resin matrix and a light control suspension dispersed in the resin matrix.

In a specific aspect of the light control laminate according to the present invention, the light control laminate has a curved surface portion.

In a specific aspect of the light control laminate according to the present invention, the resin spacers have a spherical shape and the CV value of the particle diameter of the resin spacer is 2.0% or more.

In a specific aspect of the light control laminate according to the present invention, the average particle diameter of the resin spacer is 1 $\mu$m or more and is 50 $\mu$m or less.

In a specific aspect of the light control laminate according to the present invention, the resin spacers have a pillar-like shape.

In a specific aspect of the light control laminate according to the present invention, the average height of the resin spacer is 1 $\mu$m or more and is 50 $\mu$m or less.

The use of a resin spacer according to the present invention comprises the features of claim 10.

## EFFECT OF THE INVENTION

Since the light control laminate according to the present invention is provided with a first transparent base material, a second transparent base material, and a light control layer arranged between the first transparent base material and the second transparent base material, and the light control layer contains plural resin spacers, the gap between base materials can be controlled with high precision.

The resin spacer for light control laminates according to the present invention is a resin spacer used in a light control layer in a light control laminate provided with a first transparent base material, a second transparent base material, and the light control layer arranged between the first transparent base material and the second transparent base material. In the resin spacer according to the present invention, the resin spacer has a spherical shape or a pillar-like shape. In the resin spacer according to the present invention, when the resin spacer has a spherical shape, the CV value of the particle diameter of the sphere-shaped resin spacer is 2.0% or more, and when the resin spacer has a pillar-like shape, the 10% K value of the pillar-shaped resin spacer is 10000 N/mm$^2$ or less. The light control laminate is a suspended particle device light control laminate or a polymer dispersed liquid crystal system light control laminate. Since the resin spacer of the present invention is provided with the above-mentioned configuration, the gap between base materials can be controlled with high precision.

**BRIEF DESCRIPTION OF DRAWINGS**

[Fig. 1] Fig. 1 is a sectional view schematically showing a PDLC system light control laminate in accordance with a first embodiment of the present invention.
[Fig. 2] Fig. 2 is a sectional view schematically showing an SPD system light control laminate in accordance with a second embodiment of the present invention.

**MODE(S) FOR CARRYING OUT THE INVENTION**

Hereinafter, the present invention will be described in detail. In this connection, in the present specification, for example, "(meth)acrylate" means one or both of "acrylate" and "methacrylate", and "(meth)acrylic" means one or both of "acrylic" and "methacrylic".

(Light control laminate)

The light control laminate according to the present invention is provided with a first transparent base material, a second transparent base material, and a light control layer arranged between the first transparent base material and the second transparent base material. In the light control laminate according to the present invention, the light control layer contains plural resin spacers.

Since the light control laminate according to the present invention is provided with the above-mentioned configuration, the gap between base materials can be controlled with high precision.

Moreover, the light control laminate according to the present invention can have a shape having a curved surface portion. For example, a transparent base material in a state of having a curved surface can be used. When a conventional light control material has a curved surface portion, securing the uniformity of a gap between base materials is very difficult. However, since the light control laminate according to the present invention is provided with the above-mentioned configuration, for example, even when the light control laminate has a curved surface portion, the light control layer is not crushed at the curved surface portion and the uniformity of a gap between base materials can be secured. Consequently, the occurrence of troubles such as color irregularity caused by ununiformity of the gap can be suppressed.

Since effects of the present invention are further exerted, it is preferred that the light control laminate have a curved surface portion, and it is preferred that the light control laminate be used in a state of having a curved surface portion. It is preferred that the light control laminate have a bent shape or a curved shape, and it is preferred that the light control laminate be used in a state of having a bent shape or a curved shape. The light control laminate may have a bent portion or a curved portion. It is preferred that the light control laminate and the transparent base material have a flexibility so as to be capable of being formed into a bent shape or a curved shape.

For example, the transparent base material is a base material having light transmitting properties (a light transmissive base material). For example, light is transmitted through a transparent base material from one side of the transparent base material to the other side thereof. For example, when matter is viewed through a transparent base material from one side of the transparent base material, the matter positioned at the other side thereof can be visually recognized. For example, being semitransparent is also included in the concept of being transparent. The transparent base material may be colorless transparent and may be colored transparent.

Next, specific embodiments of the present invention will be described with reference to the drawings.

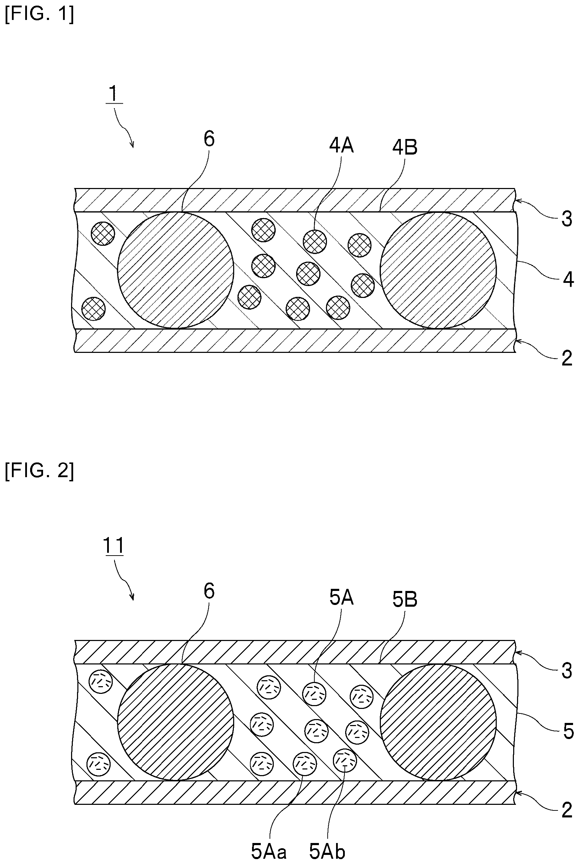

Fig. 1 is a sectional view schematically showing a PDLC system light control laminate in accordance with a first embodiment of the present invention. Fig. 2 is a sectional view schematically showing an SPD system light control laminate in accordance with a second embodiment of the present invention. In this connection, in Figs. 1 and 2, for convenience of illustration, the size of each of the light control layer and the resin spacer, the thickness thereof, the shape thereof, the addition amount thereof, and the like are appropriately modified from the actual size and shape.

The PDLC system light control laminate 1 shown in Fig. 1 is provided with a first base material 2, a second base material 3, and a light control layer 4. The light control layer 4 is sandwiched between the first base material 2 and the second base material 3. The light control layer 4 is arranged between the first base material 2 and the second base material 3. In a space between the first base material 2 and the second base material 3, a sealing agent may be arranged along the circumference of the light control layer 4.

The light control layer 4 contains a liquid crystal capsule 4A, a binder 4B, and a resin spacer 6. The liquid crystal capsule 4A is a liquid crystal material. The liquid crystal capsules 4A are dispersed in the binder 4B. The liquid crystal capsule 4A is held in an encapsulated state in the binder 4B. The liquid crystal material in an encapsulated state may be dispersed in the binder, and the liquid crystal material may be formed into a continuous phase to be dispersed in the binder.

The resin spacer 6 is a sphere-shaped resin spacer. The resin spacer may have a spherical shape and may have a pillar-like shape. The resin spacer 6 is in contact with the first base material 2 and the second base material 3. The resin spacer 6 controls the gap between the first base material 2 and the second base material 3.

Two transparent electrodes are respectively formed on a surface of the first base material 2 and on a surface of the second base material 3 (not illustrated). Examples of the material for the transparent electrode include indium tin oxide (ITO) and the like.

When a PDLC system light control laminate 1 is in a state of being applied with no electric field, since orientation of liquid crystal molecules in a liquid crystal capsule 4A is not uniform, the incident light is scattered in the binder 4B due to a difference in the refractive index between the binder and the liquid crystal material, and the PDLC system light control laminate 1 is made into an opaque state.

When a PDLC system light control laminate 1 is applied with an electric field, liquid crystal molecules in a liquid crystal capsule 4A are arrayed in a direction parallel to the electric field direction. In this state, since refractive indexes of the binder 4B and the liquid crystal material become equivalent, the light can transmit therethrough, and the PDLC system light control laminate 1 is made into a transparent state.

The SPD system light control laminate 11 shown in Fig. 2 is provided with a first base material 2, a second base material 3, and a light control layer 5. The light control layer 5 is sandwiched between the first base material 2 and the second base material 3. The light control layer 5 is arranged between the first base material 2 and the second base material 3.

The light control layer 5 contains a liquid droplet 5A of a light control suspension, a resin matrix 5B, and a resin spacer 6. The liquid droplets 5A of a light control suspension are dispersed in the resin matrix 5B. The liquid droplet 5A of a light control suspension is held in a state of being a liquid droplet in the resin matrix 5B.

The liquid droplet 5A of a light control suspension contains a dispersion medium 5Aa and a light control particle 5Ab. The light control particles 5Ab are dispersed in the dispersion medium 5Aa.

The resin spacer 6 is a sphere-shaped resin spacer. The resin spacer may have a spherical shape and may have a pillar-like shape. The resin spacer 6 is in contact with the first base material 2 and the second base material 3. The resin spacer 6 controls the gap between the first base material 2 and the second base material 3.

Two transparent electrodes are respectively formed on a surface of the first base material 2 and on a surface of the second base material 3 (not illustrated). Examples of the material for the transparent electrode include indium tin oxide (ITO) and the like.

When an SPD system light control laminate 11 is in a state of being applied with no electric field, the incident light is absorbed, scattered, or reflected due to Brownian motion of the light control particles 5Ab which are dispersed in the dispersion medium 5Aa constituting the liquid droplet 5A of a light control suspension, and the incident light fails to transmit through the light control layer 5.

When an SPD system light control laminate 11 is applied with an electric field, the light control particles 5Ab are arrayed in a direction parallel to the electric field direction. As such, the incident light can pass through between the light control particles 5Ab arrayed, and the incident light can transmit through the light control layer 5.

Hereinafter, other details of the present invention will be described.

(Resin spacer)

The resin spacer according to the present invention is a resin spacer used for light control laminates. Specifically, the resin spacer for light control laminates according to the present invention is a resin spacer used in a light control layer in a light control laminate provided with a first transparent base material, a second transparent base material, and the light control layer arranged between the first transparent base material and the second transparent base material. The resin spacer according to the present invention has a spherical shape or a pillar-like shape. When the resin spacer according to the present invention has a spherical shape, the CV value of the particle diameter of the resin spacer with a spherical shape is 2.0% or more. When the resin spacer according to the present invention has a pillar-like shape, the 10% K value of the spacer with a pillar-like shape is 10000 N/mm$^2$ or less.

Since the resin spacer according to the present invention is provided with the above-mentioned configuration, the gap between base materials can be controlled with high precision.

In the light control laminate according to the present invention, it is preferred that the resin spacer have a spherical shape or a pillar-like shape. With regard to the light control laminate according to the present invention and the resin spacer according to the present invention, the resin spacer may have a spherical shape and may have a pillar-like shape. It is more preferred that the resin spacer have a spherical shape. When the resin spacer has a spherical shape, at the time of producing a light control laminate, a roll-to-roll process can be applied to the production, and the production costs of the light control laminate can be reduced. The spherical shape is not limited to the perfectly spherical shape, a nearly spherical shape is included therein, and examples thereof also include a shape with an aspect ratio (major axis diameter/minor axis diameter) of 1.5 or less. Examples of the pillar-like shape include a cylindrical shape, a polygonal columnar shape, and the like.

As a resin for forming the resin spacer, various organic substances are suitably used. Examples of the resin for forming the resin spacer include polyolefin resins such as polyethylene, polypropylene, polystyrene, polyvinyl chloride, polyvinylidene chloride, polyisobutylene, and polybutadiene; acrylic resins such as polymethyl methacrylate and polymethyl acrylate; a polycarbonate, a polyamide, a phenol-formaldehyde resin, a melamine-formaldehyde resin, a benzoguanamine-formaldehyde resin, a urea-formaldehyde resin, a phenol resin, a melamine resin, a benzoguanamine resin, a urea resin, an epoxy resin, an unsaturated polyester resin, a saturated polyester resin, polyethylene terephthalate, a polysulfone, polyphenylene oxide, a polyacetal, a polyimide, a polyamide-imide, polyetheretherketone, a polyethersulfone, a divinylbenzene-based polymer, a divinylbenzene-based copolymer, and the like. Examples of the divinylbenzene-based copolymer include a divinylbenzene-styrene copolymer, a divinylbenzene-(meth)acrylate copolymer, and the like. Since the hardness of the resin spacer can be easily controlled within a suitable range, it is preferred that the resin for forming the resin spacer be a polymer obtained by polymerizing one kind or two or more kinds of polymerizable monomers having an ethylenically unsaturated group.

When polymerizable monomers having an ethylenically unsaturated group are polymerized to obtain the resin spacer, examples of the polymerizable monomer having an ethylenically unsaturated group include a noncrosslinkable monomer and a crosslinkable monomer.

Examples of the noncrosslinkable monomer include a vinyl compound, a (meth)acrylic compound, an $\alpha$-olefin compound, a conjugated diene compound, and the like. Examples of the vinyl compound include styrenic monomers such as styrene, $\alpha$-methylstyrene, and chlorostyrene; vinyl ether compounds such as methyl vinyl ether, ethyl vinyl ether, propyl vinyl ether, 1,4-butanediol divinyl ether, cyclohexanedimethanol divinyl ether, and diethylene glycol divinyl ether; acid vinyl ester compounds such as vinyl acetate, vinyl butyrate, vinyl laurate, and vinyl stearate; and halogen-containing monomers such as vinyl chloride and vinyl fluoride; examples of the (meth)acrylic compound include alkyl (meth)acrylate compounds such as methyl (meth)acrylate, ethyl (meth)acrylate, propyl (meth)acrylate, butyl (meth)acrylate, 2-ethylhexyl (meth)acrylate, lauryl (meth)acrylate, cetyl (meth)acrylate, stearyl (meth)acrylate, cyclohexyl (meth)acrylate, and isobornyl (meth)acrylate; oxygen atom-containing (meth)acrylate compounds such as 2-hydroxyethyl (meth)acrylate, glycerol (meth)acrylate, polyoxyethylene (meth)acrylate, and glycidyl (meth)acrylate; nitrile-containing monomers such as (meth)acrylonitrile; and halogen-containing (meth)acrylate compounds such as trifluoromethyl (meth)acrylate and pentafluoroethyl (meth)acrylate; examples of the $\alpha$-olefin compound include olefin compounds such as diisobutylene, isobutylene, LINEALENE, ethylene, and propylene; and examples of the conjugated diene compound include isoprene, butadiene, and the like.

Examples of the crosslinkable monomer include a vinyl compound, a (meth)acrylic compound, an allyl compound, a silane compound, a cyclic siloxane, a modified (reactive) silicone oil, a carboxyl group-containing monomer, and the like. Examples of the vinyl compound include vinyl monomers such as divinylbenzene, 1,4-divinyloxy-butane, and divinyl sulfone; examples of the (meth)acrylic compound include multifunctional (meth)acrylate compounds such as tetramethylolmethane tetra(meth)acrylate, polytetramethylene glycol diacrylate, tetramethylolmethane tri(meth)acrylate, tetramethylolmethane di(meth)acrylate, trimethylolpropane tri(meth)acrylate, dipentaerythritol hexa(meth)acrylate, dipentaerythritol penta(meth)acrylate, glycerol tri(meth)acrylate, glycerol di(meth)acrylate, polyethylene glycol di(meth)acrylate, polypropylene glycol di(meth)acrylate, polytetramethylene glycol di(meth)acrylate, and 1,4-butanediol di(meth)acrylate; examples of the allyl compound include triallyl (iso)cyanurate, triallyl trimellitate, diallyl phthalate, diallyl acrylamide, and diallyl ether; examples of the silane compound include silane alcoxide compounds such as tetramethoxysilane, tetraethoxysilane, triethylsilane, t-butyldimethylsilane, methyltrimethoxysilane, methyltriethoxysilane, ethyltrimethoxysilane, ethyltriethoxysilane, isopropyltrimethoxysilane, isobutyltrimethoxysilane, cyclohexyltrimethoxysilane, n-hexyltrimethoxysilane, n-octyltriethoxysilane, n-decyltrimethoxysilane, phenyltrimethoxysilane, dimethyldimethoxysilane, dimethyldiethoxysilane, diisopropyldimethoxysilane, trimethoxysilylstyrene, $\gamma$-(meth)acryloxypropyltrimethoxysilane, 1,3-divinyltetramethyldisiloxane, methylphenyldimethoxysilane, and diphenyldimethoxysilane; and polymerizable double bondcontaining silane alcoxides such as vinyltrimethoxysilane, vinyltriethoxysilane, dimethoxymethylvinylsilane, dimethoxyethylvinylsilane, diethoxymethylvinylsilane, diethoxyethylvinylsilane, ethylmethyldivinylsilane, methylvinyldimethoxysilane, ethylvinyldimethoxysilane, methylvinyldiethoxysilane, ethylvinyldiethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, and 3-acryloxypropyltrimethoxysilane; examples of the cyclic siloxane include decamethylcyclopentasiloxane; examples of the modified (reactive) silicone oil include a one terminalmodified silicone oil, a silicone oil with both terminals modified, and a side chain-type silicone oil; and examples of the carboxyl group-containing monomer include (meth)acrylic acid, maleic acid, and maleic anhydride.

The polymerizable monomers having an ethylenically unsaturated group can be polymerized to obtain the resin spacer. With regard to the above-mentioned polymerization, a polymerization method is not particularly limited, and monomers can be polymerized by a known method such as radical polymerization, ionic polymerization, polycondensation reaction (condensation polymerization, polycondensation), addition condensation, living polymerization, and living radical polymerization.

The polymerizable monomers having an ethylenically unsaturated group can be subjected to a radical polymerization and the like to easily obtain the sphere-shaped resin spacer. For example, the resin spacer can be obtained by a method in which monomers are subjected to a suspension polymerization in the presence of a radical polymerization initiator, a seed polymerization method being a method in which uncrosslinked seed particles are swollen with monomers and a radical polymerization initiator, and the monomers are made to be polymerized, a dispersion polymerization method, or the like.

The pillar-shaped resin spacer can be easily obtained by patterning processing. For example, a resin composition containing the polymerizable monomers having an ethylenically unsaturated group and the like is applied onto a base material so that the resulting coating film has a prescribed thickness. Afterward, the monomers are polymerized by heat and the like, and the coating film is made into a polymer film. A prescribed resist material is applied onto a surface of the obtained polymer film, and the resist material is cured by light and the like to be made into a resist film. Next, by removing polymer film portions on which the resist film is not formed and peeling off the resist film, the pillar-shaped resin spacer can be obtained. In this connection, a method of forming the pillar-shaped resin spacer is not limited to this method.

From the viewpoint of securing a gap between base materials, the CV value of the particle diameter of the sphere-shaped resin spacer is preferably 2.0% or more and more preferably 2.5% or more. When the role of a conventional resin spacer is taken into account, it has been said that the CV value of the particle diameter of the sphere-shaped resin spacer is preferable to be made smaller. On the other hand, in the light control laminate of the present invention, it is preferred that the CV value of the particle diameter of the sphere-shaped resin spacer lie within the above-mentioned range, and thereby, in particular, when a light control laminate has a curved surface portion or when an operation in which a light control laminate is bent or the like is conducted, the resin spacer can follow the light control laminate and the movement of the resin spacer can be suppressed. The upper limit of the CV value of the particle diameter of the sphere-shaped resin spacer is not particularly limited. The CV value of the particle diameter of the sphere-shaped resin spacer may be 30% or less.

The CV value (coefficient of variation value) of the particle diameter of the sphere-shaped resin spacer can be calculated according to the following equation.

$$\text{The CV value (\%)} = (\rho / Dn) \times 100$$

$\rho$: the standard deviation of the particle diameter of the sphere-shaped resin spacer
$Dn$: the average value of the particle diameter of the sphere-shaped resin spacer

The shape of the sphere-shaped resin spacer is not particularly limited. The shape of the sphere-shaped resin spacer may be a spherical shape and may be a shape other than a sphere-like shape such as a flat shape.

From the viewpoint of securing a gap between base materials and the viewpoint of preventing the base material from being flawed, the 10% K value of the sphere-shaped resin spacer is preferably 10000 N/mm$^2$ or less and more preferably 7000 N/mm$^2$ or less. The lower limit of the 10% K value of the sphere-shaped resin spacer is not particularly limited. The 10% K value of the sphere-shaped resin spacer may be 10 N/mm$^2$ or more.

The 10% K value of the sphere-shaped resin spacer can be measured in the following manner.

With the use of a microcompression testing machine, a sphere-shaped resin spacer is compressed under the condition where a maximum test load of 20 mN is applied thereto over a period of 60 seconds at 25°C by means of a smooth indenter end face of a column (50 μm in diameter, made of diamond). At this time, the load value (N) and the compression displacement (mm) are measured. From the obtained measured values, the 10% K value can be determined by the following equation. As the microcompression testing machine, for example, "FISCHERSCOPE H-100" available from FISCHER INSTRUMENTS K.K. or the like is used.

$$\text{The 10\% K value (N/mm}^2\text{)} = (3/2^{1/2}) \cdot F \cdot S^{-3/2} \cdot R^{-1/2}$$

$F$: the load value (N) measured when the sphere-shaped resin spacer is compressively deformed by 10%
$S$: the compression displacement (mm) measured when the sphere-shaped resin spacer is compressively deformed by 10%
$R$: the radius (mm) of the sphere-shaped resin spacer

From the viewpoint of practicality, the average particle diameter of the sphere-shaped resin spacer is preferably

1 μm or more and more preferably 8 μm or more and is preferably 50 μm or less and more preferably 30 μm or less.

When the sphere-shaped resin spacer has a perfectly spherical shape, the particle diameter of the sphere-shaped resin spacer means a diameter of the perfect sphere, and when the sphere-shaped resin spacer has a shape other than a perfectly spherical shape, the particle diameter thereof means a diameter of a perfect sphere in the case of assuming that the sphere-shaped resin spacer is the perfect sphere having a volume equivalent to that of the sphere-shaped resin spacer.

Moreover, when plural sphere-shaped resin spacers are adopted, the particle diameter of the sphere-shaped resin spacer means an average particle diameter obtained when the sphere-shaped resin spacers are measured by means of any particle diameter measuring apparatus. For example, a particle size distribution measuring machine in which the principle of laser light scattering, the change in electric resistance value, image analysis after image capturing, or the like is used can be utilized. Specifically, when plural sphere-shaped resin spacers are adopted, examples of a method of measuring the particle diameter of the sphere-shaped resin spacer include a method of measuring about 100000 particles thereof for the particle diameter with the use of a particle size distribution measuring apparatus ("Multisizer 4" available from Beckman Coulter, Inc.) to determine an average particle diameter. The average particle diameter refers to the number average particle diameter.

The aspect ratio of the sphere-shaped resin spacer is preferably 1.5 or less and more preferably 1.3 or less. The aspect ratio refers to a ratio of the major axis diameter/the minor axis diameter. When plural sphere-shaped resin spacers are adopted, the aspect ratio is preferably determined by observing ten particles of the sphere-shaped resin spacer arbitrarily selected with an electron microscope or an optical microscope, measuring the ten particles thereof for the major axis diameter as the maximum diameter and the minor axis diameter as the minimum diameter, and calculating an average value of ten measured values of the major axis diameter/the minor axis diameter of the respective particles of the sphere-shaped resin spacer.

From the viewpoint of securing a gap between base materials, the CV value of the height of the pillar-shaped resin spacer is preferably 2.0% or more and more preferably 2.5% or more. The upper limit of the CV value of the height of the pillar-shaped resin spacer is not particularly limited. The CV value of the height of the pillar-shaped resin spacer may be 30% or less.

The CV value (coefficient of variation value) of the particle diameter of the pillar-shaped resin spacer can be calculated according to the following equation.

$$\text{The CV value (\%)} = (\rho / Dn) \times 100$$

ρ: the standard deviation of the height of the pillar-shaped resin spacer
Dn: the average value of the height of the pillar-shaped resin spacer

From the viewpoint of securing a gap between base materials and the viewpoint of preventing the base material from being flawed, the 10% K value of the pillar-shaped resin spacer is preferably 10000 N/mm$^2$ or less and more preferably 7000 N/mm$^2$ or less. The lower limit of the 10% K value of the pillar-shaped resin spacer is not particularly limited. The 10% K value of the pillar-shaped resin spacer may be 10 N/mm$^2$ or more.

The 10% K value of the pillar-shaped resin spacer can be measured in the following manner. Moreover, it is preferred that the pillar-shaped resin spacer be compressed in a direction connecting a first transparent base material and a second transparent base material in an arrangement state of the light control laminate to be measured for the 10% K value thereof.

With the use of a microcompression testing machine, a pillar-shaped resin spacer is compressed under the condition where a maximum test load of 20 mN is applied thereto over a period of 60 seconds at 25°C by means of a smooth indenter end face of a column (50 μm in diameter, made of diamond). At this time, the load value (N) and the compression displacement (mm) are measured. From the obtained measured values, the 10% K value can be determined by the following equation. As the microcompression testing machine, for example, "FISCHERSCOPE H-100" available from FISCHER INSTRUMENTS K.K. or the like is used.

$$\text{The 10\% K value (N/mm}^2) = (3/2^{1/2}) \cdot F \cdot S^{-3/2} \cdot R^{-1/2}$$

F: the load value (N) measured when the pillar-shaped resin spacer is compressively deformed by 10%
S: the compression displacement (mm) measured when the pillar-shaped resin spacer is compressively deformed by 10%

R: the radius (mm) of the pillar-shaped resin spacer

From the viewpoint of practicality, the average height of the pillar-shaped resin spacer is preferably 1 μm or more and more preferably 8 μm or more and is preferably 50 μm or less and more preferably 30 μm or less.

The average height is determined by observing particles of the pillar-shaped resin spacer with a scanning electron microscope and arithmetically averaging fifty measured values of the maximum height of the respective fifty particles of the pillar-shaped resin spacer arbitrarily selected from particles in an observed image.

The aspect ratio of the pillar-shaped resin spacer is preferably 20 or less and more preferably 10 or less. The aspect ratio refers to a ratio of the maximum lengthwise directional dimension/the minimum lengthwise directional dimension. When plural pillar-shaped resin spacers are adopted, the aspect ratio is preferably determined by observing ten particles of the pillar-shaped resin spacer arbitrarily selected with an electron microscope or an optical microscope, measuring the ten particles for the major axis diameter as the maximum diameter and the minor axis diameter as the minimum diameter, and calculating an average value of ten measured values of the major axis diameter/the minor axis diameter of the respective particles of the pillar-shaped resin spacer.

From the viewpoint of further enhancing the visibility through a light control laminate, the visible light transmittance of the resin spacer is preferably 75% or more and more preferably 80% or more.

The visible light transmittance of the resin spacer can be measured in the following manner.

A plate-shaped sample of the same composition as that of the resin spacer is prepared, and the sample can be subjected to spectroscopic measurement and the like to be measured for the visible light transmittance in accordance with ISO13837 (2008). Moreover, the sample can also be measured therefor by a method in accordance with JIS K6714 standard.

The resin spacer is used for light control laminates. The resin spacer may be used as a spacer for light control glass and may be used as a spacer for light control films.

(Light control layer)

It is preferred that the light control layer have a light controlling property. The light controlling property is a property by which the visible light transmittance can be made to vary depending on the presence or absence of the electric field application to control the incident light quantity. The material for the light control layer is not particularly limited, and any material is acceptable as long as the light control layer is made to have a light controlling property.

(PDLC system)

It is preferred that the light control layer further contain a binder and a liquid crystal material dispersed in the binder.

The liquid crystal material is not particularly limited, and any liquid crystal material is acceptable as long as the liquid crystal material has a property of varying in orientation depending on the electric field application. The liquid crystal material may be formed into a continuous phase in the binder to be dispersed therein, and the liquid crystal material in a state of being a liquid crystal drop or in an encapsulated state may be dispersed in the binder. Examples of the liquid crystal material include a nematic liquid crystal, a cholesteric liquid crystal, and the like.

Examples of the material for the cholesteric liquid crystal include a steroidal cholesterol derivative, nematic liquid crystals or smectic liquid crystals such as Schiff base-based one, azo-based one, azoxy-based one, benzoic ester-based one, biphenyl-based one, terphenyl-based one, cyclohexylcarboxylic acid ester-based one, phenylcyclohexanebased one, biphenylcyclohexane-based one, pyrimidine-based one, dioxane-based one, cyclohexylcyclohexane ester-based one, cyclohexylethane-based one, cyclohexane-based one, tolanebased one, alkenyl-based one, stilbene-based one, and condensed polycyclic one, a material prepared by adding a chiral component composed of optically active materials such as a Schiff base-based material, an azo-based material, an ester-based material, and a biphenyl-based material to a mixed liquid crystal of those, and the like. One kind of the material for the cholesteric liquid crystal may be used alone, and two or more kinds thereof may be used in combination.

The binder holds the liquid crystal material and suppresses the flow of the liquid crystal material. The binder is not particularly limited as long as the binder is not dissolved in the liquid crystal material, has a strength capable of withstanding the external force, and furthermore, has high transmitting properties against the reflected light and the incident light. Examples of the material for the binder include water-soluble high-molecular materials such as gelatin, polyvinyl alcohol, a cellulose derivative, a polyacrylic acid-based polymer, ethyleneimine, polyethylene oxide, a polyacrylamide, a polystyrenesulfonate, polyamidine, and an isoprene-based sulfonic acid polymer, aqueously emulsifiable materials such as a fluororesin, a silicone resin, an acrylic resin, a urethane resin, and an epoxy resin, and the like. One kind of the material for the binder may be used alone, and two or more kinds thereof may be used in combination.

It is preferred that the binder be crosslinked with a crosslinking agent. The crosslinking agent is not particularly limited as long as a crosslinkage is formed between binder molecules and the binder is made hard film, is made hardly-soluble, or is insolubilized. Examples of the crosslinking agent include acetaldehyde, glutaraldehyde, glyoxal, a potassium alum hydrate of a polyvalent metal salt compound, adipic acid dihydrazide, a melamine-formalin oligomer, ethylene glycol diglycidyl ether, polyamideepichlorohydrin, polycarbodiimide, and the like. One kind of the crosslinking agent may be used alone, and two or more kinds thereof may be used in combination.

(SPD system)

It is preferred that the light control layer further contain a resin matrix and a light control suspension dispersed in the resin matrix.

The light control suspension contains a dispersion medium and light control particles dispersed in the dispersion medium.

Examples of the material for the light control particle include a polyiodide, a carbon-based material such as carbon black, a metallic material such as copper, nickel, iron, cobalt, chromium, titanium, and aluminum, an inorganic compound material such as silicon nitride, titanium nitride, and aluminum oxide, and the like. Moreover, the light control particle may be a particle in which any of these materials is covered with a polymer. One kind of the light control particle may be used alone, and two or more kinds thereof may be used in combination.

The dispersion medium disperses the light control particles in a flowable state. It is preferred that the dispersion medium be a material that selectively adheres to the light control particle, covers the light control particle, it acts on the light control particle so as to make the light control particle move into a liquid droplet phase phase-separated at the time of the phase separation from a resin matrix, has no electrical conductivity, and has no affinity with the resin matrix. Furthermore, it is preferred that the dispersion medium be a liquid copolymer having a refractive index close to that of the resin matrix when incorporated into a light control laminate. As the liquid copolymer, preferred is a (meth)acrylic acid ester oligomer having a fluoro group or a hydroxyl group, and more preferred is a (meth)acrylic acid ester oligomer having a fluoro group or a hydroxyl group. When such a copolymer is used, monomer units with a fluoro group or a hydroxyl group face toward the light control particle, and other monomer units stabilize the liquid droplet of a light control suspension in the resin matrix. As such, light control particles are easily dispersed in the light control suspension, and the light control particle is easily guided into the liquid droplet phase-separated at the time of the phase separation from the resin matrix.

Examples of the (meth)acrylic acid ester oligomer having a fluoro group or a hydroxyl group include a 2,2,2-trifluoroethyl methacrylate/butyl acrylate/2-hydroxyethyl acrylate interpolymer, a 3,5,5-trimethylhexyl acrylate/2-hydroxypropyl acrylate/fumaric acid interpolymer, a butyl acrylate/2-hydroxyethyl acrylate interpolymer, a 2,2,3,3-tetrafluoropropyl acrylate/butyl acrylate/2-hydroxyethyl acrylate interpolymer, a 1H,1H,5H-octafluoropentyl acrylate/butyl acrylate/2-hydroxyethyl acrylate interpolymer, a 1H,1H,2H,2H-heptadecafluorodecyl acrylate/butyl acrylate/2-hydroxyethyl acrylate interpolymer, a 2,2,2-trifluoroethyl methacrylate/butyl acrylate/2-hydroxyethyl acrylate interpolymer, a 2,2,3,3-tetrafluoropropyl methacrylate/butyl acrylate/2-hydroxyethyl acrylate interpolymer, a 1H,1H,5H-octafluoropentyl methacrylate/butyl acrylate/2-hydroxyethyl acrylate interpolymer, a 1H,1H,2H,2H-heptadecafluorodecyl methacrylate/butyl acrylate/2-hydroxyethyl acrylate interpolymer, and the like. Moreover, it is more preferred that the (meth) acrylic acid ester oligomer have both of a fluoro group and a hydroxyl group.

The weight average molecular weight of the (meth)acrylic acid ester oligomer is preferably 1000 or more and more preferably 2000 or more and is preferably 20000 or less and more preferably 10000 or less.

A resin material for forming the resin matrix and the light control suspension can be used to prepare the light control layer.

It is preferred that the resin material be a resin material irradiated with energy rays to be cured. Examples of the resin material irradiated with energy rays to be cured include a high-molecular composition containing a photopolymerization initiator and a high-molecular compound curable with energy rays such as ultraviolet rays, visible rays, and electron rays. Examples of the high-molecular composition include a high-molecular composition containing a polymerizable monomer having an ethylenically unsaturated group and a photopolymerization initiator. Examples of the polymerizable monomer having an ethylenically unsaturated group include a noncrosslinkable monomer and a crosslinkable monomer.

Examples of the noncrosslinkable monomer include the above-described noncrosslinkable monomers. Examples of the crosslinkable monomer include the above-described crosslinkable monomers.

Examples of the photopolymerization initiator include 2,2-dimethoxy-1,2-diphenylethan-1-one, 1-(4-(2-hydroxyethoxy)phenyl)-2-hydroxy-2-methyl-1-propan-1-one, bis(2,4,6-trimethylbenzoyl)phenyl phosphine oxide, 2-hydroxy-2-methyl-1-phenylpropan-1-one, (1-hydroxycyclohexyl)phenyl ketone, and the like.

The resin material may contain an organic solventsoluble type resin, a thermoplastic resin, poly(meth)acrylic acid, and the like. Moreover, the resin material may contain various kinds of additives such as a coloration inhibitor, an oxidation inhibitor, and an adhesion imparting agent and may contain a solvent.

(First transparent base material and second transparent base material)

The materials for the first transparent base material and second transparent base material are not particularly limited. The material for the first transparent base material and the material for the second transparent base material may be the same as or different from each other. Examples of the material for the transparent base material include glass, a resin film, and the like. Examples of the glass include soda-lime glass for general building, lead glass, borosilicate glass, respective kinds of glass having different compositions for other uses, respective kinds of functional glass such as heat reflecting glass, heat absorbing glass, and reinforced glass. Examples of the resin film include polyester films such as a polyethylene terephthalate film, polyolefin films such as a polypropylene film, and resin films such as an acrylic resin-based film. It is preferred that the transparent base material be a resin base material, it is more preferred that the transparent base material be a resin film, and it is further preferred that the transparent base material be a polyethylene terephthalate film, because those are excellent in transparency, formability, adhesive properties, processability, and the like.

It is preferred that the transparent base material be provided with a base material main body and a transparent conductive film formed on a surface of the base material main body so as to be capable of applying an electric field for light control. Examples of the transparent conductive film include indium tin oxide (ITO), $SnO_2$, $In_2O_3$, and the like.

From the viewpoint of further enhancing the visibility through a light control laminate, the visible light transmittance of the first transparent base material and second transparent base material is preferably 75% or more and more preferably 80% or more.

The transparent base material can be measured for the visible light transmittance in the following manner.

Spectroscopic measurement and the like can be performed to measure the visible light transmittance in accordance with ISO13837 (2008).

Hereinafter, the present invention will be described in detail with reference to examples and comparative examples. The present invention is not limited only to the following examples.

(Example 1)

(1) Spacer

Preparation of resin spacer 1:

To 1000 parts by weight of divinylbenzene (96% purity), 20 parts by weight of benzoyl peroxide was added and stirred until the benzoyl peroxide was uniformly dissolved to obtain a monomer mixed liquid. In a reaction pot, 4000 parts by weight of an aqueous 2% by weight polyvinyl alcohol solution prepared by dissolving polyvinyl alcohol with a molecular weight of about 1700 in pure water was placed. To this, the obtained monomer mixed liquid was added and stirred for 4 hours to adjust particle diameters of liquid droplets of the monomer to prescribed particle diameters. Afterward, the contents were made to undergo a reaction for 9 hours under a nitrogen atmosphere at 90°C to perform the polymerization reaction of monomer liquid droplets and to obtain particles. The obtained particles were washed with several portions of each of hot water, methanol, and acetone, after which a classifying operation was conducted to recover a resin spacer 1. The resin spacer 1 was determined to have an average particle diameter of 10.1 μm.

(2) Light control laminate

Preparation of SPD system light control laminate 1:

A light control film in which an SPD layer, being a known one except that the resin spacer 1 was dispersed at 5% by weight therein, was arranged between two sheets of PET films on each of which ITO, being transparent and having a conductivity, was vapor-deposited was prepared. The light control film was sandwiched between two sheets of transparent glass to prepare an SPD system light control laminate 1 (having no curved surface).

Preparation of SPD system light control laminate 2:

A light control film which is the same as that prepared for the SPD system light control laminate 1 was sandwiched between two sheets of transparent curved glass of 3 mmR to prepare an SPD system light control laminate 2 (having a curved surface (curved shape)).

Preparation of PDLC system light control laminate 1:

A light control film in which a PDLC layer, being a known one except that the resin spacer 1 was dispersed at 5% by weight therein, was arranged between two sheets of PET films on each of which ITO, being transparent and having a conductivity, was vapor-deposited was prepared. The light control film was sandwiched between two sheets of transparent glass to prepare a PDLC system light control laminate 1 (having no curved surface).

Preparation of PDLC system light control laminate 2:

A light control film which is the same as that prepared for the PDLC system light control laminate 1 was sandwiched between two sheets of transparent curved glass of 3 mmR to prepare a PDLC system light control laminate 2 (having a curved surface (curved shape)).

(Example 2)

Preparation of resin spacer 2:

A resin spacer 2 was prepared in the same manner as that for the resin spacer 1 except that 100 parts by weight of polytetramethylene glycol diacrylate, 800 parts by weight of isobornyl acrylate, and 100 parts by weight of cyclohexyl methacrylate were used in place of 1000 parts by weight of divinylbenzene (96% purity). The resin spacer 2 was determined to have an average particle diameter of 12.0 $\mu$m.
A light control laminate was prepared in the same manner as that in Example 1 except that the resin spacer 2 was used in place of the resin spacer 1 at the time of preparing the light control laminate.

(Example 3)

Preparation of resin spacer 3:

In 30 parts by weight of a dual-end acrylic type silicone oil ("X-22-2445" available from Shin-Etsu Chemical Co., Ltd.), 0.5 parts by weight of tert-butyl-2-ethylperoxyhexanoate (a polymerization initiator, "PERBUTYL O" available from NOF CORPORATION) was dissolved to prepare a dissolution liquid A. Moreover, with 150 parts by weight of ion-exchanged water, 0.8 parts by weight of an aqueous 40% by weight triethanolamine lauryl sulfate solution (an emulsifying agent) and 80 parts by weight of a 5% by weight aqueous solution of polyvinyl alcohol (the polymerization degree: about 2000, the saponification degree: 86.5 to 89%, "Gohsenol GH-20" available from The Nippon Synthetic Chemical Industry Co., Ltd.) were mixed to prepare an aqueous solution B. Into a separable flask installed in a warm bath, the dissolution liquid A was placed, and then, the aqueous solution B was added thereto. Afterward, the Shirasu Porous Glass (SPG) membrane (about 20 $\mu$m in average pore diameter) was used to perform the emulsification. Afterward, the temperature of the contents was elevated to 85°C and the contents were made to undergo a polymerization for 9 hours. The whole amount of particles after polymerization was centrifuged to be washed with water, after which a classifying operation was conducted to prepare a resin spacer 3. The resin spacer 3 was determined to have an average particle diameter of 9.7 $\mu$m.
A light control laminate was prepared in the same manner as that in Example 1 except that the resin spacer 3 was used in place of the resin spacer 1 at the time of preparing the light control laminate.

(Example 4)

Preparation of resin spacer 4:

A polymerization reaction was performed in the same manner as that in Example 1 to obtain particles. The obtained particles were washed with several portions of each of hot water, methanol, and acetone, after which a classifying operation was conducted to recover a resin spacer 4. The resin spacer 4 was determined to have an average particle diameter of 20.0 $\mu$m.
A light control laminate was prepared in the same manner as that in Example 1 except that the resin spacer 4 was used in place of the resin spacer 1 at the time of preparing the light control laminate.

(Comparative Example 1)

A light control laminate was prepared in the same manner as that in Example 1 except that the resin spacer 1 was not used at the time of preparing the light control laminate.

(Comparative Example 2)

Silica spacer:

"Micropearl SI-H100" available from SEKISUI CHEMICAL CO., LTD. (10.0 $\mu$m in average particle diameter)
A light control laminate was prepared in the same manner as that in Example 1 except that the silica spacer was used in place of the resin spacer 1 at the time of preparing the light control laminate.

(Evaluation)

(1) Average particle diameter

With the use of a particle size distribution measuring apparatus ("Multisizer 4" available from Beckman Coulter, Inc.), about 100000 particles of the obtained spacer were measured for the particle diameter to determine the average particle diameter and the standard deviation.

(2) CV value

With regard to the obtained spacer, by the method described above, the CV value of the particle diameter of the spacer was calculated.

(3) 10% K value

With the use of "FISCHERSCOPE H-100" available from FISCHER INSTRUMENTS K.K., by the method described above, the obtained spacer was measured for the 10% K value of the spacer.

(4) Visible light transmittance

With the use of "SolidSpec-3700" available from SHIMADZU CORPORATION, the obtained light control laminate was subjected to spectroscopic measurement to calculate the illuminant A light source visible light transmittance in accordance with ISO13837 (2008).

(5) Color irregularity

The obtained light control laminate was visually evaluated whether or not color irregularity had occurred. The color irregularity was judged according to the following criteria.

[Criteria for judgment in color irregularity]

○: No color irregularity has occurred.
△: Color irregularity has occurred very slightly (causing no problem in practical use).
×: Color irregularity has occurred.

The results are shown in the following Table 1.

[Table 1]

| Evaluation | | | Example 1 | Example 2 | Example 3 | Example 4 | Comparative Example 1 | Comparative Example 2 |
|---|---|---|---|---|---|---|---|---|
| Spacer | Average particle diameter ($\mu$m) | | 10.1 | 12 | 9.7 | 20 | | 10 |
| | CV value (%) | | 2.9 | 4.8 | 10.6 | 3.4 | - | 0.9 |
| | 10% K value (N/mm$^2$) | | 5700 | 1600 | 100 | 3300 | - | 41000 |
| Light control laminate | Visible light transmittance (applied) | SPD system light control laminate 1 | 79.3 | 80.5 | 82.2 | 75.2 | 85.8 | 80.3 |
| | | SPD system light control laminate 2 | 76.4 | 78.2 | 82 | 73.6 | 85.5 | 80.2 |
| | | PDLC system light control laminate 1 | 83.7 | 83.4 | 84.5 | 79.8 | 86.2 | 81.4 |
| | | PDLC system light control laminate 2 | 80.0 | 81.9 | 84.1 | 77.5 | 85.8 | 80.7 |
| | Visible light transmittance (not applied) | SPD system light control laminate 1 | 3.6 | 3.8 | 3.7 | 3.1 | 5.9 | 3.6 |
| | | SPD system light control laminate 2 | 5.1 | 4.5 | 4 | 4.8 | 10.1 | 9.7 |
| | | PDLC system light control laminate 1 | 3.9 | 3.8 | 3.9 | 3.5 | 8.7 | 4.1 |
| | | PDLC system light control laminate 2 | 4.5 | 4.8 | 4.5 | 4 | 12.8 | 10.9 |
| | Color irregularity | SPD system light control laminate 1 | ○ | ○ | ○ | ○ | × | △ |
| | | SPD system light control laminate 2 | △ | ○ | ○ | △ | × | × |
| | | PDLC system light control laminate 1 | ○ | ○ | ○ | ○ | × | △ |
| | | PDLC system light control laminate 2 | △ | ○ | ○ | △ | × | × |

**EXPLANATION OF SYMBOLS**

1: PDLC system light control laminate
2: First base material
3: Second base material
4, 5: Light control layer
4A: Liquid crystal capsule
4B: Binder
5A: Liquid droplet of light control suspension
5Aa: Dispersion medium
5Ab: Light control particle
5B: Resin matrix
6: Resin spacer
11: SPD system light control laminate

**Claims**

1. A light control laminate, comprising: a first transparent base material (2); a second transparent base material (3); and a light control layer (4, 5) arranged between the first transparent base material (2) and the second transparent base material (3),

   the light control layer (4) containing plural resin spacers (6),
   the 10% K value of the resin spacer (6) being 10000 N/mm$^2$ or less, and

   the light control laminate being a Suspended Particle Device (SPD) system light control laminate (11) or a Polymer Dispersed Liquid Crystal (PDLC) system light control laminate (1) .

2. The light control laminate according to claim 1, wherein the resin spacers (6) have a spherical shape or a pillar-like shape.

3. The light control laminate according to claim 1 or 2, wherein the light control layer (4, 5) further contains a binder (4B) and a liquid crystal material (4A) dispersed in the binder (4B).

4. The light control laminate according to claim 1 or 2, wherein the light control layer (4, 5) further contains a resin matrix (5B) and a light control suspension (5A) dispersed in the resin matrix (5B).

5. The light control laminate according to any one of claims 1 to 4, further having a curved surface portion.

6. The light control laminate according to any one of claims 1 to 5, wherein the resin spacers (6) have a spherical shape and
   the CV value of the particle diameter of the resin spacer is 2.0% or more.

7. The light control laminate according to claim 6, wherein the average particle diameter of the resin spacer (6) is 1 $\mu$m or more and is 50 $\mu$m or less.

8. The light control laminate according to any one of claims 1 to 5, wherein the resin spacers (6) have a pillar-like shape.

9. The light control laminate according to claim 8, wherein the average height of the resin spacer (6) is 1 $\mu$m or more and is 50 $\mu$m or less.

10. Use of a resin spacer (6) for obtaining a light control laminate, the light control laminate comprising a first transparent base material (2), a second transparent base material (3), and a light control layer (4, 5) arranged between the first transparent base material (2) and the second transparent base material (3),

    the light control laminate being a Suspended Particle Device (SPD)system light control laminate (11) or a Polymer Dispersed Liquid Crystal (PDLC) system light control laminate (1),
the resin spacer (6) being used in the light control layer (4, 5) in the light control laminate,
the resin spacer (6) having a spherical shape or a pillar-like shape,
when having spherical shape, the resin spacer (6) having the CV value of the particle diameter of the sphere-shaped resin spacer (6) being 2.0% or more and having the 10%K value of the pillar-shaped spacer being 10000 N/mm$^2$ or less, and
when having pillar-like shape, the resin spacer (6) having the 10% K value of the pillar-shaped spacer being 10000 N/mm$^2$ or less.

## Patentansprüche

1. Lichtsteuerungslaminat, umfassend: ein erstes transparentes Basismaterial (2); ein zweites transparentes Basismaterial (3); und eine Lichtsteuerungsschicht (4, 5), die zwischen dem ersten transparenten Basismaterial (2) und dem zweiten transparenten Basismaterial (3) angeordnet ist,

   wobei die Lichtsteuerungsschicht (4) mehrere Harzabstandshalter (6) enthält, wobei der 10%-K-Wert des Harzabstandshalters (6) 10.000 N/mm$^2$ oder weniger beträgt, und
   das Lichtsteuerungslaminat ein Lichtsteuerungslaminat (11) mit Suspended Particle Device- (SPD-)System oder ein Lichtsteuerungslaminat (1) mit Polymer Dispersed Liquid Crystal- (PDLC-) System ist.

2. Lichtsteuerungslaminat nach Anspruch 1, wobei die Harzabstandshalter (6) eine sphärische Form oder eine säulenartige Form haben.

3. Lichtsteuerungslaminat nach Anspruch 1 oder 2, wobei die Lichtsteuerungsschicht (4, 5) ferner ein Bindemittel (4B) und ein in dem Bindemittel (4B) dispergiertes Flüssigkristallmaterial (4A) enthält.

4. Lichtsteuerungslaminat nach Anspruch 1 oder 2, wobei die Lichtsteuerungsschicht (4, 5) ferner eine Harzmatrix (5B) und eine in der Harzmatrix (5B) dispergierte Lichtsteuerungssuspension (5A) enthält.

5. Lichtsteuerungslaminat nach einem der Ansprüche 1 bis 4, welches ferner einen gekrümmten Oberflächenabschnitt aufweist.

6. Lichtsteuerungslaminat nach einem der Ansprüche 1 bis 5, wobei die Harzabstandshalter (6) eine sphärische Form haben und
   der CV-Wert des Teilchendurchmessers des Harzabstandshalters 2,0% oder mehr beträgt.

7. Lichtsteuerungslaminat nach Anspruch 6, wobei der durchschnittliche Teilchendurchmesser des Harzabstandshalters (6) 1 µm oder mehr und 50 µm oder weniger beträgt.

8. Lichtsteuerungslaminat nach einem der Ansprüche 1 bis 5, wobei die Harzabstandshalter (6) eine säulenartige Form haben.

9. Lichtsteuerungslaminat nach Anspruch 8, wobei die durchschnittliche Höhe des Harzabstandshalters (6) 1 µm oder mehr und 50 µm oder weniger beträgt.

10. Verwendung eines Harzabstandshalters (6), um ein Lichtsteuerungslaminat zu erhalten, wobei das Lichtsteuerungslaminat ein erstes transparentes Basismaterial (2), ein zweites transparentes Basismaterial (3) und eine zwischen dem ersten transparenten Basismaterial (2) und dem zweiten transparenten Basismaterial (3) angeordneten Lichtsteuerungsschicht (4, 5) umfasst,

    wobei das Lichtsteuerungslaminat ein Lichtsteuerungslaminat (11) mit Suspended Particle Device- (SPD-)System oder ein Lichtsteuerungslaminat (1) mit Polymer Dispersed Liquid Crystal- (PDLC-) System ist,
    wobei der Harzabstandshalter (6) in dem Lichtsteuerungslaminat in der Lichtsteuerungsschicht (4, 5) verwendet wird,
    wobei der Harzabstandshalter (6) eine sphärische Form oder eine säulenartige Form hat,
    wobei der Harzabstandshalter (6), wenn er eine sphärische Form hat, den CV-Wert des Teilchendurchmessers des Harzabstandshalters (6) mit sphärischer Form hat, der 2,0% oder mehr beträgt, und den 10%-K-Wert des säulenartigen Abstandshalters hat, der 10.000 N/mm$^2$ oder weniger beträgt, und
wobei der Harzabstandshalter (6), wenn er eine säulenartige Form hat, den 10%-K-Wert des säulenartigen Abstandshalters hat, der 10.000 N/mm$^2$ oder weniger beträgt.

**Revendications**

1. Stratifié de commande de lumière, comportant : un premier matériau de base transparent (2) ; un second matériau de base transparent (3) ; et une couche de commande de lumière (4, 5) disposée entre le premier matériau de base transparent (2) et le second matériau de base transparent (3),

   la couche de commande de lumière (4) contenant une pluralité d'éléments d'espacement en résine (6),
   la valeur K à 10 % de l'élément d'espacement en résine (6) étant de 10 000 N/mm$^2$ ou moins, et
   le stratifié de commande de lumière étant un stratifié de commande de lumière (11) pour système de dispositif à particules en suspension (SPD) ou un stratifié de commande de lumière (1) pour système à cristaux liquides dispersés dans un polymère (PDLC).

2. Stratifié de commande de lumière selon la revendication 1, dans lequel les éléments d'espacement en résine (6) ont une forme sphérique ou une forme analogue à une colonnette.

3. Stratifié de commande de lumière selon la revendication 1 ou 2, dans lequel la couche de commande de lumière (4, 5) contient en outre un liant (4B) et un cristal liquide (4A) dispersé dans le liant (4B).

4. Stratifié de commande de lumière selon la revendication 1 ou 2, dans lequel la couche de commande de lumière (4, 5) contient en outre une résine matrice (5B) et une suspension de commande de lumière (5A) dispersée dans la résine matrice (5B).

5. Stratifié de commande de lumière selon l'une quelconque des revendications 1 à 4, ayant en outre une partie de surface courbe.

6. Stratifié de commande de lumière selon l'une quelconque des revendications 1 à 5, dans lequel les éléments d'espacement en résine (6) ont une forme sphérique et
la valeur CV du diamètre de particule de l'élément d'espacement en résine est de 2,0 % ou plus.

7. Stratifié de commande de lumière selon la revendication 6, dans lequel le diamètre de particule moyen de l'élément d'espacement en résine (6) est de 1 μm ou plus et est de 50 μm ou moins.

8. Stratifié de commande de lumière selon l'une quelconque des revendications 1 à 5, dans lequel les éléments d'espacement en résine (6) ont une forme analogue à une colonnette.

9. Stratifié de commande de lumière selon la revendication 8, dans lequel la hauteur moyenne de l'élément d'espacement en résine (6) est de 1 μm ou plus et est de 50 μm ou moins.

10. Utilisation d'un élément d'espacement en résine (6) pour obtenir un stratifié de commande de lumière, le stratifié de commande de lumière comportant un premier matériau de base transparent (2), un second matériau de base transparent (3) et une couche de commande de lumière (4, 5) disposée entre le premier matériau de base transparent (2) et le second matériau de base transparent (3),

    le stratifié de commande de lumière étant un stratifié de commande de lumière (11) pour système de dispositif à particules en suspension (SPD) ou un stratifié de commande de lumière (1) pour système à cristaux liquides dispersés dans un polymère (PDLC),
    l'élément d'espacement en résine (6) étant utilisé dans la couche de commande de lumière (4, 5) dans le stratifié de commande de lumière,
    l'élément d'espacement en résine (6) ayant une forme sphérique ou une forme analogue à une colonnette,
    lorsqu'il a une forme sphérique, l'élément d'espacement en résine (6) ayant la valeur CV du diamètre de particule de l'élément d'espacement en résine en forme de sphère (6) étant de 2,0 % ou plus et ayant la valeur K à 10 % de l'élément d'espacement en forme de colonnette étant de 10 000 N/mm$^2$ ou moins, et
    lorsqu'il a une forme analogue à une colonnette, l'élément d'espacement en résine (6) ayant la valeur K à 10 % de l'élément d'espacement en forme de colonnette étant de 10 000 N/mm$^2$ ou moins.

[FIG. 1]

[FIG. 2]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014139693 A
- WO 2016051894 A1
- JP 2013228646 A
- US 2009033859 A
- JP 2003238622 B